# EUROPEAN PATENT APPLICATION

(11) **EP 4 385 611 A1**
(43) Date of publication of application: **19.06.2024**
(21) Application number: 22214040.2
(22) Date of filing: 16.12.2022
(51) Int. Cl.: B01D 63/08, B01D 71/06, B01D 69/06

(54) **A FILTRATION UNIT**

(71) Applicant: MANN+HUMMEL LIFE SCIENCES & ENVIRONMENT HOLDING SINGAPORE PTE. LTD., Singapore 139234 (SG)
(72) Inventor: TEZERDI, Cihan, 55246 Mainz (DE); SCHREIER, Dominik, 55543 Bad Kreuznach (DE); BOPP, Christoph, 55283 Nierstein (DE); LYKO, Michael, 44229 Dortmund (DE); FISCHER, Andreas, 55459 Aspisheim (DE)
(74) Representative: Mann + Hummel Intellectual Property

(57) **Abstract**

The present invention provides a filtration unit for a liquid filtration system, including: a disk-shaped polymeric filtration member including a first surface and a second surface, wherein the first surface is connected to the second surface with an inner side wall and an outer side wall; and a stabilizing structure comprising an inner stabilizing ring and an outer stabilizing ring, wherein the inner stabilizing ring reinforces an edge of the inner side wall of the disk-shaped polymeric filtration member and the outer stabilizing ring encircles the outer side wall of the disk-shaped polymeric filtration member, wherein the inner stabilizing ring is connected to the outer stabilizing ring with a plurality of ribs extending along the first surface and the second surface of the disk-shaped polymeric filtration member; and a method of assembling the filtration unit.

## Description

### Technical Field

The invention relates to a filtration unit for a liquid filtration system including a disk-shaped polymeric filtration member and a stabilizing structure and to a method of assembling the filtration unit.

### Background Art

Conventional filtration units for a liquid filtration system may consist of a ceramic membrane disk. During the filtration process, the ceramic disk may be rotating at a rotational speed of 360 revolutions per minute (rpm). Problems encountered with said ceramic disk may be a necessity for a high transmembrane pressure and a reduced capacity for chemical backwashing, which may complicate maintenance and decrease performance.

Moreover, the production of such a conventional ceramic membrane disk may be associated with a high cost.

It is therefore an object to provide an improved filtration unit and a method of assembling the improved filtration unit.

### Summary

In a first aspect, there is provided a filtration unit for a liquid filtration system, including: a disk-shaped polymeric filtration member comprising a first surface and a second surface, wherein the first surface is connected to the second surface with an inner side wall and an outer side wall; and a stabilizing structure comprising an inner stabilizing ring and an outer stabilizing ring, wherein the inner stabilizing ring reinforces an edge of the inner side wall of the disk-shaped polymeric filtration member and the outer stabilizing ring encircles the outer side wall of the disk-shaped polymeric filtration member, wherein the inner stabilizing ring is connected to the outer stabilizing ring with a plurality of ribs extending along at least one of the first surface and the second surface of the disk-shaped polymeric filtration member.

According to various embodiments, the filtration unit may be configured to be suitable for (e.g., used in) ultrafiltration, microfiltration, or nanofiltration in the liquid filtration system.

According to various embodiments, the disk-shaped polymeric filtration member may include a membrane.

According to various embodiments, the disk-shaped polymeric filtration member may include at least two membranes and a spacer, wherein the spacer may be sandwiched by the at least two membranes.

According to various embodiments, the stabilizing structure may be adhesively affixed to the disk-shaped polymeric filtration member. In a preferred embodiment, the stabilizing structure may be adhesively affixed to the disk-shaped polymeric filtration member by using a glue net.

According to various embodiments, the stabilizing structure may include a polymer.

According to various embodiments, the inner stabilizing ring at its smallest expansion may have a diameter of less than 14 cm, optionally a diameter in a range of about 10 cm to about 15 cm, optionally in a range of about 12 cm to about 14 cm.

According to various embodiments, the outer stabilizing ring at its largest expansion may have a diameter of at least 30 cm, or more than 30 cm, optionally at least, or more than, 35 cm, optionally a diameter in a range of about 30 cm to about 40 cm, optionally in a range of about 35 cm to about 38 cm.

According to various embodiments, at least two ribs of the plurality of ribs may be spaced from each other in an angle of more than 90°, optionally wherein the at least two ribs may be spaced from each other in an angle of less than 180°, optionally wherein the at least two ribs may be spaced from each other in an angle of 120°.

According to various embodiments, each rib of the plurality of ribs may have a first width measured at the inner stabilizing ring and a second width measured at the outer stabilizing ring, and wherein the second width may be larger than the first width, optionally wherein the second width may be about 3 cm to about 7 cm, optionally about 5 cm, optionally wherein the first width may be about 2 cm to about 3 cm, optionally about 2.5 cm.

According to various embodiments, the outer stabilizing ring may encircle the outer side wall of the disk-shaped polymeric filtration member with a thickness of about 1 mm to about 5 mm, optionally with a thickness of about 3 mm.

According to various embodiments, the stabilizing structure may include a first stabilizing part and a second stabilizing part, wherein the first stabilizing part may be connected to the second stabilizing part at the outer stabilizing ring.

According to various embodiments, the first stabilizing part may include a protrusion at the outer stabilizing ring and the second stabilizing part may include a receptacle at the outer stabilizing ring, wherein the protrusion of the first stabilizing part may be interlocked with the receptacle of the second stabilizing part.

In another aspect, there is provided a method of assembling a filtration unit as described herein, the method including: providing a disk-shaped polymeric filtration member comprising a first surface and a second surface, wherein the first surface is connected to the second surface with an inner side wall and an outer side wall; and adhering a stabilizing structure to the disk-shaped polymeric filtration member, wherein the stabilizing structure comprises an inner stabilizing ring and an outer stabilizing ring, wherein the inner stabilizing ring is connected to the outer stabilizing ring with a plurality of ribs, wherein the stabilizing structure is adhered to the disk-shaped polymeric filtration member in such a manner that the inner stabilizing ring of the stabilizing structure reinforces an edge of the inner side wall of the disk-shaped polymeric filtration member and the outer stabilizing ring of the stabilizing structure encircles the outer side wall of the disk-shaped polymeric filtration member, and the plurality of ribs extend along at least one of the first surface and the second surface of the disk-shaped polymeric filtration member.

According to various embodiments, adhering the stabilizing structure to the disk-shaped polymeric filtration member may include adhesively affixing the stabilizing structure to the disk-shaped polymeric filtration member. In a preferred embodiment, adhering the stabilizing structure to the disk-shaped polymeric filtration member may include adhesively affixing the stabilizing structure to the disk-shaped polymeric filtration member by using a glue net.

According to various embodiments, adhering the stabilizing structure to the disk-shaped polymeric filtration member may include welding the stabilizing structure to the disk-shaped polymeric filtration member.

### Brief Description of Drawings

The drawings show:
- FIG. 1A: is a top view of a filtration unit according to various embodiments.
- FIG. 1B: is a perspective view of the filtration unit according to various embodiments.
- FIG. 1C: is a side view of a filtration unit according to various embodiments.
- FIG. 1D: is a side view of a filtration unit according to various embodiments.
- FIG. 1E: is an enlarged side view of the filtration unit according to various embodiments.
- FIG. 1F: is an enlarged side view of the filtration unit according to various embodiments.
- FIG. 2A: is a top view of a filtration unit according to various embodiments.
- FIG. 2B: is a side view of a filtration unit according to various embodiments.
- FIG. 2C: is an enlarged side view of the filtration unit according to various embodiments.
- FIG. 3A: is an exploded view of a filtration unit according to various embodiments.
- FIG. 3B: is an exploded view of a filtration unit according to various embodiments.
- FIG. 4: is a simplified flow diagram for an exemplary method according to an aspect of the invention.
- FIG. 5A: is a perspective view of a liquid filtration system.
- FIG. 5B: is a perspective view of a part of a liquid filtration system.
- FIG. 5C: is a perspective view of a part of a liquid filtration system.

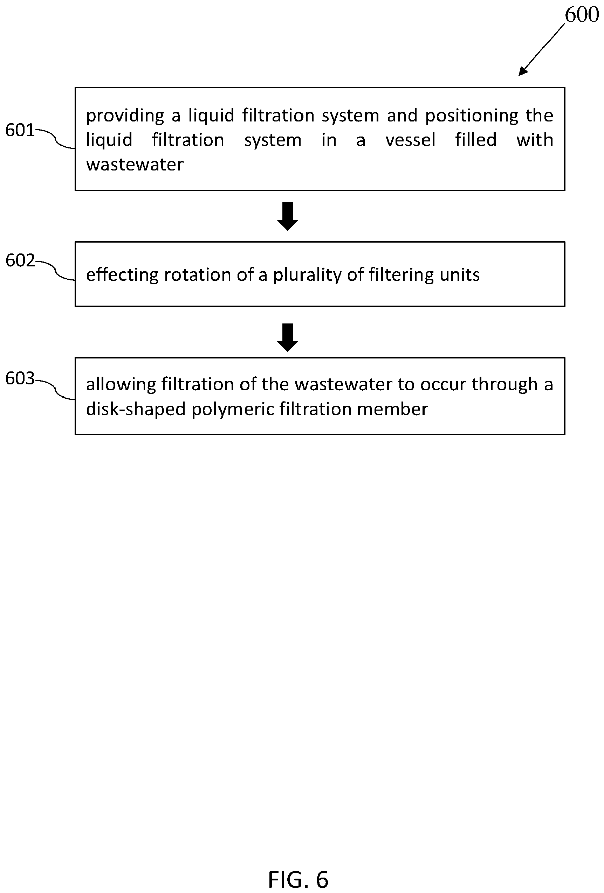

- FIG. 6: is a simplified flow diagram for an exemplary method according to an aspect of the invention.

### Detailed Description

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of a filtration unit are analogously valid for a method of assembling a filtration unit and other aspects of the disclosure.

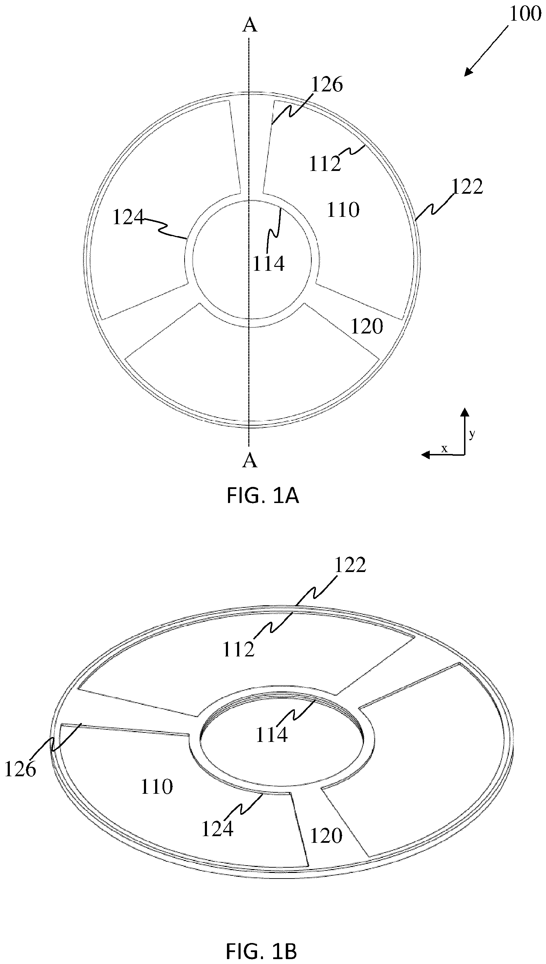

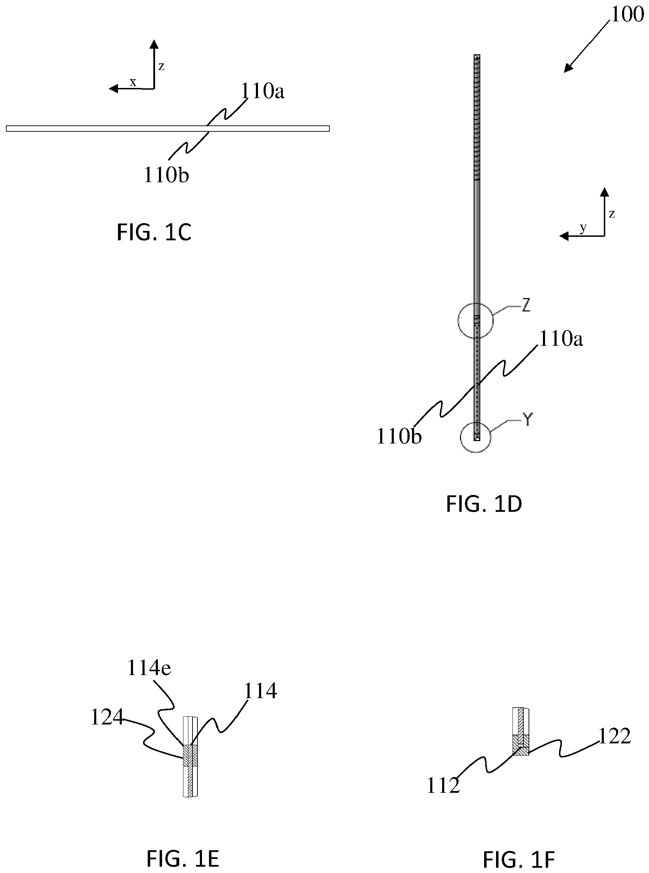

FIG. 1A to FIG. 1F show a filtration unit 100 in a top view (FIG. 1A), a perspective view (FIG. 1B), a first side view (FIG. 1C), a second side view (FIG. 1D), an enlarged view of the section Z of FIG. 1D (FIG. 1E) and an enlarged view of the section Y of FIG. 1D (FIG. 1F). The filtration unit 100 may include a disk-shaped polymeric filtration member 110 and a stabilizing structure 120. The disk-shaped polymeric filtration member 110 may extend into two directions x and y (perpendicular to each other) in the same plane, and may be in the shape of a disk (e.g., a ring, e.g., a donut). The disk-shaped polymeric filtration member 110 may be one continuously formed layer that may be produced in the form of a sheet, and may be cut into a disk shape to form the disk-shaped polymeric filtration member 110. The disk-shaped polymeric filtration member 110 may have two surfaces 110a, 110b, e.g., a first surface 110a and a second surface 110b (see, FIG. 1C). The two surfaces 110a, 110b may be opposite to each other and may be connected by an outer side wall 112 (e.g., along the circumference extending perpendicularly to the plane formed by the disk-shaped polymeric filtration member 110). Towards the center of the disk-shaped polymeric filtration member 110, the two surfaces 110a, 110b may be connected to each other by an inner side wall 114 (e.g., along the hole extending perpendicularly to the plane formed by the disk-shaped polymeric filtration member 110).

A material of the disk-shaped polymeric filtration member 110 may comprise a polymer, e.g., the disk-shaped filtration member 110 may be "polymeric". The polymer may be an organic polymer, and may advantageously result in the disk-shaped polymeric filtration member 110 allowing for a lower transmembrane pressure, as compared with a conventional ceramic disk. Furthermore, by comprising the polymer, the backwashing of the disk-shaped polymeric filtration member 110 may be facilitated, which may simplify maintenance of a liquid filtration system and therefore increase performance, as compared with the conventional ceramic disk. Furthermore, the production of the disk-shaped polymeric filtration member 110 may be more cost-effective than the production of the conventional ceramic disk.

According to various embodiments, the disk-shaped polymeric filtration member 110 may include a membrane, wherein the membrane may include a porous polymeric material. A porous polymeric material may be obtained by providing a polymeric solution (e.g., a membrane solution) and effecting a phase inversion, meaning that a method step may enable the formation of pores. These pores may be used in the liquid filtration system for the removal of impurities from wastewater. The polymeric material that may be used for the polymeric membrane may include an organic polymer material, in particular, polyethylene, polypropylene, polystyrene, styrene-ethylene-butylene-styrene copolymer, polyester, polyvinyl chloride, polyamide, poly(ether)sulfone, polyvinylidene fluoride or a combination thereof.

According to various embodiments, the disk-shaped polymeric filtration member 110 may include two membranes, between which a spacer is positioned. During filtration, the clean water, after passing through the membranes, may thus be collected in the spacer and conducted towards the hole extending perpendicularly to the plane formed by the disk-shaped polymeric filtration member 110, from where the clean water may be collected. Further components of the disk-shaped polymeric filtration member 110 may include an adhesive mesh, optionally two adhesive meshes, wherein each of the two adhesive meshes may be disposed between the spacer (i.e. sandwiching the spacer) and the two membranes (i.e. each adhesive mesh is adjacent to the spacer on one side and one of the two membranes on the other side). The disk-shaped polymeric filtration member 110 may be configured to be suitable for ultrafiltration, microfiltration, or nanofiltration in the liquid filtration system.

The disk-shaped polymeric filtration member 110 may be stabilized by the stabilizing structure 120. The stabilizing structure 120 may include an outer stabilizing ring 122, and an inner stabilizing ring 124. The outer and inner stabilizing rings 122, 124 may be configured to stabilize (e.g., reinforce, e.g., solidify, e.g., stiffen) the disk-shaped polymeric filtration member 110. In particular, the outer stabilizing ring 122 may encircle (e.g., surround) the outer side wall 112, such that a thickness of the outer side wall 112 may be increased.

The inner stabilizing ring 124 may be disposed at an edge 114e of the inner side wall 114. Thus, the inner stabilizing ring 124 may not completely encircle the inner side wall 114, such that the clean water may exit the disk-shaped polymeric filtration member 110 through the inner side wall 114 of the disk-shaped polymeric filtration member 110. With reference to FIG. 1B, the inner and outer stabilizing rings 122, 124 may increase the thickness of the outer side wall 112 and the inner side wall 114 and therefore increase the stability around the edges of the disk-shaped polymeric filtration member 110.

The inner and outer stabilizing rings 122, 124 of the stabilizing structure 120 may be stabilized themselves by a plurality of ribs 126, extending from the inner stabilizing ring 124 to the outer stabilizing ring 122. Each rib of the plurality of ribs 126 may be placed on (e.g., adhered to, attached to) the first surface 110a or the second surface 110b, e.g., the ribs 126 may be attached to an outer surface of the disk-shaped polymeric filtration member 110. Accordingly, the ribs 126 may be shown in FIG. 1B as protruding from the disk-shaped polymeric filtration member 110. While three ribs 126 are shown in the Figures, there could be any number of ribs 126 between the inner stabilizing ring 124 and the outer stabilizing ring 122, provided that filtration activity is substantially retained and stability increased.

The stabilizing structure 120 may be an integrally formed structure, e.g., it may be monolithic. In one embodiment, the stabilizing structure 120 may be formed in a 3D printing step, using, e.g., a thermoplastic polymer as the printing material. Alternatively, the stabilizing structure 120 may have been milled into the desired shape, or injection-moulded. By being integrally formed, the stabilizing structure 120 may not only stabilize the disk-shaped polymeric filtration member 110, but may also advantageously, be more stable in itself. The material from which the stabilizing structure 120 is formed may also be a material that may be more rigid than the material that is used for forming the disk-shaped polymeric filtration member 110.

Thus, according to various embodiments, the stabilizing structure 120 may include a polymer, optionally a thermoplastic polymer and may include polyethylene, polypropylene, polystyrene, styrene-ethylene-butylene-styrene copolymer, polyester, polyvinyl chloride, polyvinylidene fluoride, polyamide, polytetrafluoroethylene, polylactic acid, polybenzimidazole, polycarbonate, polyether sulfone, polyoxymethylene, polyether ether ketone, polyetherimide, polyphenylene oxide, polyphenylene sulphide or a combination thereof. In some embodiments, the polyethylene may include a low density polyethylene (LDPE), a linear low density polyethylene (LLDPE), a high density polyethylene (HDPE), an ultra-high-molecular-weight polyethylene, or a combination thereof. In some embodiments, the thermoplastic polymer may be a polyester, for example, polybutylene terephthalate and/or polyethylene terephthalate (PET). In one example, the material of the stabilizing structure 120 may include polyvinyl chloride, optionally wherein the stabilizing structure 120 may be obtained from a milling step. In another example, the material of the stabilizing structure 120 may include acrylonitrile butadiene styrene. In various embodiments, the material of the stabilizing structure 120 may be reinforced with glass fiber.

FIG. 1D shows a side view of the filtration unit 100 along the line A-A shown in FIG. 1A. Of note therein are the sections Y and Z which are shown enlarged in FIG. 1E and FIG. 1F. As shown therein, the outer side wall 112 of the disk-shaped polymeric filtration member 110 is encircled by the outer stabilizing ring 122 of the stabilizing structure 120. The inner side wall 114 of the disk-shaped polymeric filtration member 110 may only be reinforced around the edge 114e of the inner side wall 114 by the inner stabilizing ring 124 of the stabilizing structure 120. In other words, the inner stabilizing ring 124 may be attached to (e.g., adhered to) a peripheral end of the first or the second surface 110a, 110b that is closest to the edge 114e with the inner side wall 114. Hence, the portion of the inner side wall 114 that faces towards the hole in the disk-shaped polymeric filtration member 110 may not be, or only partially be, reinforced by the inner stabilizing ring 124. This design may facilitate a flow of clean water through the inner side wall 114.

Advantageously, the filtration unit 100 as shown herein combines the advantages of the disk-shaped polymeric filtration member 110 over the conventional ceramic disk, that are described above, with the stability that would typically be associated with the conventional ceramic disk by the use of the stabilizing structure 120. Thus, it may be possible to utilize the filtration unit 100 in liquid filtration systems that require high rotational speeds (e.g., up to 360 rpm), while allowing for a low transmembrane pressure, having a facilitated maintenance (through the ease of backwashing) and a relatively low production cost.

According to various embodiments, the stabilizing structure 120 may be attached (e.g., affixed) to the disk-shaped polymeric filtration member 110 by means of adhesion. Alternatively, the stabilizing structure 120 may be attached (e.g., affixed) to the disk-shaped polymeric filtration member 110 by welding.

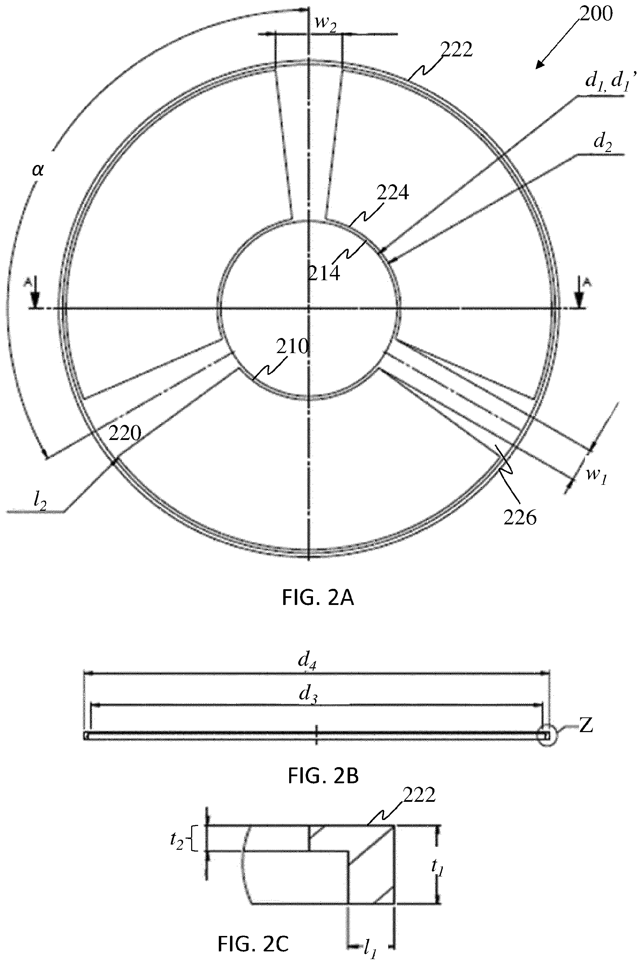

FIG. 2A, 2B and 2C describe the dimensions of a filtration unit 200. Components described in context with the filtration unit 100 are likewise present in the filtration unit 200. With reference to FIG. 2A, the dimensions of the filtration unit 200 may be such that the disk-shaped polymeric filtration member 210 at its smallest expansion has a diameter *d₁* of less than 14 centimeter (cm), optionally a diameter *d₁* in a range of about 10 to about 15 cm, optionally in a range of about 12 to about 14 cm, optionally of about 13.2 cm. The disk-shaped polymeric filtration member 210 may have, at its largest expansion, a diameter of at least 30 cm, optionally at least or more than 35 cm, optionally a diameter in a range of about 35 to about 40 cm, optionally in a range of about 37 to about 39 cm, optionally of about 37.1 cm.

According to various embodiments, the inner stabilizing ring 224 may have, at its smallest expansion, a diameter *d₁'* that may be substantially identical to the diameter *d₁* of the disk-shaped polymeric filtration member 210 at its smallest expansion. Accordingly, the diameter *d₁'* may be less than 14 cm, optionally in a range of about 10 to about 15 cm, optionally in a range of about 12 to about 14 cm, optionally of about 13.2 cm. The inner stabilizing ring 224 may have, at its largest expansion, a diameter *d₂* of more than 12 cm, optionally a diameter *d₂* in a range of about 12 to about 16 cm, optionally in a range of about 13 to about 15 cm, optionally of about 13.7 cm. Hence, a width of the inner stabilizing ring 224 may be, for example, in a range of about 3 to about 10 millimeter (mm), optionally in a range of about 4 to about 7 mm, optionally of about 5 mm.

FIG. 2B is a side view of FIG. 2A taken along the line A-A. According to various embodiments, and as illustrated in FIG. 2B, the outer stabilizing ring 222 may have, at its smallest expansion, a diameter *d₃* of less than 40 cm, optionally a diameter in a range of about 34 to about 38 cm, optionally in a range of about 36 to about 38 cm, optionally of about 36.3 cm. The outer stabilizing ring 222 may have, at its largest expansion, a diameter *d₄* of more than 35 cm, optionally a diameter *d₄* in a range of about 35 to about 40 cm, optionally in a range of about 37 to about 39 cm, optionally of about 37.4 cm. Hence, a width of the outer stabilizing ring 222 may be, for example, in a range of about 8 to about 15 mm, optionally in a range of about 8 to about 13 mm, optionally of about 11 mm.

FIG. 2C is an enlarged view of the section Z shown in FIG. 2B. According to various embodiments, the disk-shaped polymeric filtration member 210 together with the stabilizing structure 220 may have a thickness *t₁* of about 4 to 10 mm, optionally a thickness *t₁* in a range of about 5 to about 8 mm, optionally of about 6 mm. The stabilizing structure 220 may have a thickness *t₂* of about 1 to 5 mm, optionally a thickness *t₂* in a range of about 2 to about 4 cm, optionally of about 2 mm.

According to various embodiments, the outer stabilizing ring 222 may encircle the outer side wall 212 of the disk-shaped polymeric filtration member 210 with a length *l₁* of about 1 to 5 mm, optionally a length *l₁* in a range of about 2 to about 4 mm, optionally of about 3 mm.

According to various embodiments, at least two ribs of the plurality of ribs 226 may be spaced from each other in an angle *α* of more than 90°, optionally wherein the at least two ribs may be spaced from each other in an angle *α* of less than 180°, optionally wherein the at least two ribs may be spaced from each other in an angle of 120°.

According to various embodiments, each rib of the plurality of ribs 226 may have a first width *w₁* measured at the inner stabilizing ring 224 and a second width *w₂* measured at the outer stabilizing ring 222, and wherein the second width *w₂* may be larger than the first width, optionally wherein the second width *w₂* may be about 3 to about 7 cm, optionally about 5 cm, optionally wherein the first width *w₁* may be about 2 cm to about 3 cm, optionally about 2.5 cm.

According to various embodiments, each rib of the plurality of ribs 226 may have a length *l₂* of about 20 to 25 cm, optionally a length *l₂* in a range of about 22 to about 24 cm, optionally of about 22.6 cm.

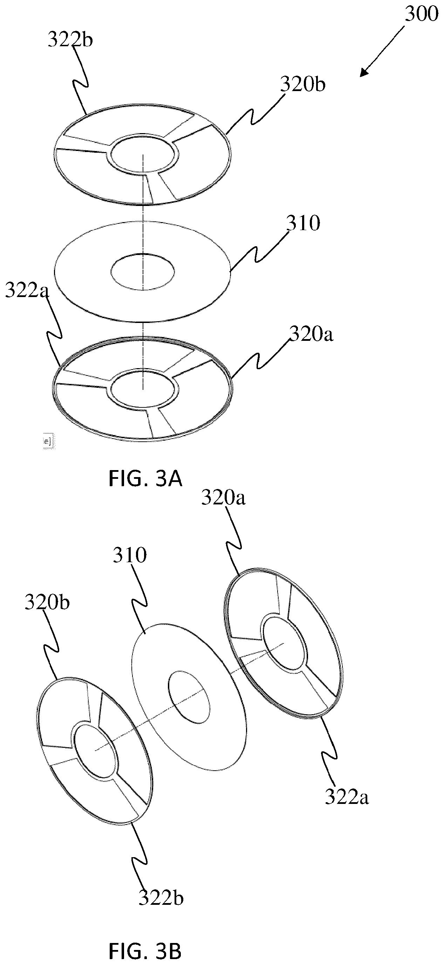

FIG. 3A and 3B illustrate a filtering unit 300 in an exploded view from two different perspectives. Components described in context with the filtration unit 100 and 200 may be present in the filtration unit 300. With reference to FIG. 3A and FIG. 3B, the stabilizing structure may include a first stabilizing part 320a and a second stabilizing part 320b, wherein the first stabilizing part 320a may be connected to the second stabilizing part 320b, when assembled, at outer stabilizing ring parts 322a, 322b.

According to various embodiments, the first stabilizing part 320a may include a protrusion at the outer stabilizing ring 322a and the second stabilizing part 320b may include a receptacle at the outer stabilizing ring 322b, wherein the protrusion of the first stabilizing part 320a may interlock with the receptacle of the second stabilizing part 320b.

In another aspect, there is provided a method 400 of assembling the filtration unit 100, 200 and 300 as described herein before. The method may include a first step 401 of providing a disk-shaped filtration member including a first surface and a second surface, wherein the first surface is connected to the second surface with an inner side wall and an outer side wall. The disk-shaped filtration member may be described as herein before. The method may include a second step 402, including adhering a stabilizing structure to the disk-shaped filtration member. The stabilizing structure may include an inner stabilizing ring and an outer stabilizing ring, wherein the inner stabilizing ring is connected to the outer stabilizing ring with a plurality of ribs. The stabilizing structure may be adhered to the disk-shaped polymeric filtration member in such a manner that the inner stabilizing ring of the stabilizing structure reinforces an edge of the inner side wall of the disk-shaped polymeric filtration member and the outer stabilizing ring of the stabilizing structure encircles the outer side wall of the disk-shaped polymeric filtration member, and the plurality of ribs extend along the first surface and the second surface of the disk-shaped polymeric filtration member.

According to various embodiments, the method may include a step of producing the stabilizing structure, optionally wherein the production of the stabilizing structure may involve 3D-printing the stabilizing structure.

According to various embodiments, the adhering the stabilizing structure to the disk-shaped polymeric filtration member may include adhesively affixing the stabilizing structure to the disk-shaped polymeric filtration member. Alternatively, the adhering the stabilizing structure to the disk-shaped polymeric filtration member may include welding the stabilizing structure to the disk-shaped polymeric filtration member.

According to various embodiments, the stabilizing structure may include a first stabilizing part and a second stabilizing part. In these embodiments, the method may include a step of interposing the disk-shaped filtration member between the first stabilizing part and the second stabilizing part. The method may include a step of interlocking the first stabilizing part and the second stabilizing part at the outer stabilizing ring. In some embodiments, the first stabilizing part may include a protrusion at the outer stabilizing ring and the second stabilizing part may include a receptacle at the outer stabilizing ring. In these embodiments, the method may further include a step of interlocking the protrusion of the first stabilizing part with the receptacle of the second stabilizing part.

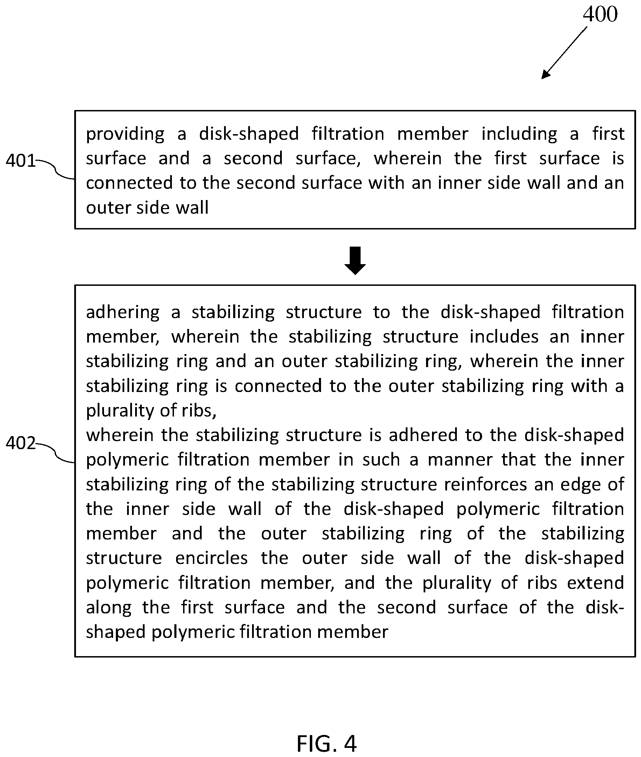

FIG. 4 shows a simplified flow diagram for an exemplary method 400 according to an aspect of the present method.

The operation 401 may be directed to providing a disk-shaped filtration member including a first surface and a second surface, wherein the first surface is connected to the second surface with an inner side wall and an outer side wall.

The operation 402 may be directed to adhering a stabilizing structure to the disk-shaped filtration member, wherein the stabilizing structure includes an inner stabilizing ring and an outer stabilizing ring, wherein the inner stabilizing ring is connected to the outer stabilizing ring with a plurality of ribs, wherein the stabilizing structure is adhered to the disk-shaped polymeric filtration member in such a manner that the inner stabilizing ring of the stabilizing structure reinforces an edge of the inner side wall of the disk-shaped polymeric filtration member and the outer stabilizing ring of the stabilizing structure encircles the outer side wall of the disk-shaped polymeric filtration member, and the plurality of ribs extend along the first surface and the second surface of the disk-shaped polymeric filtration member.

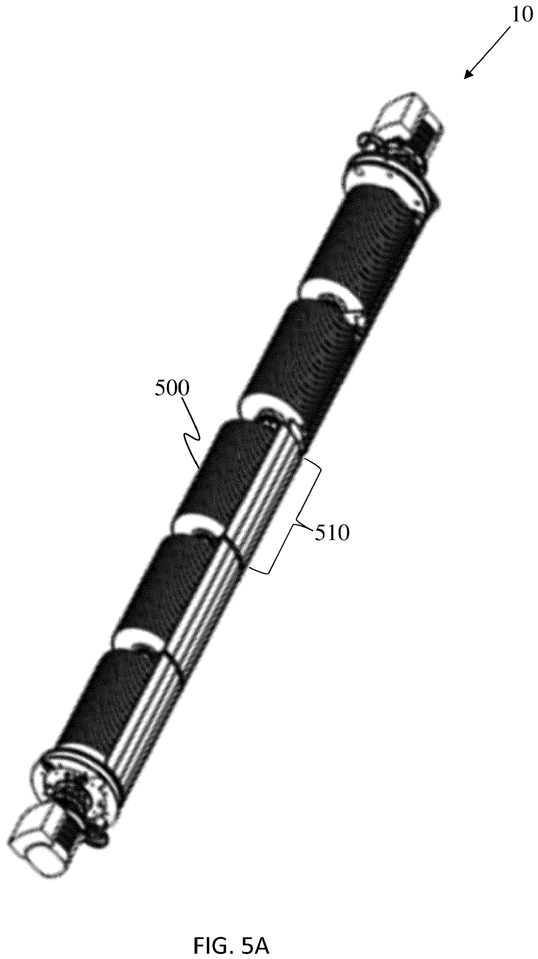

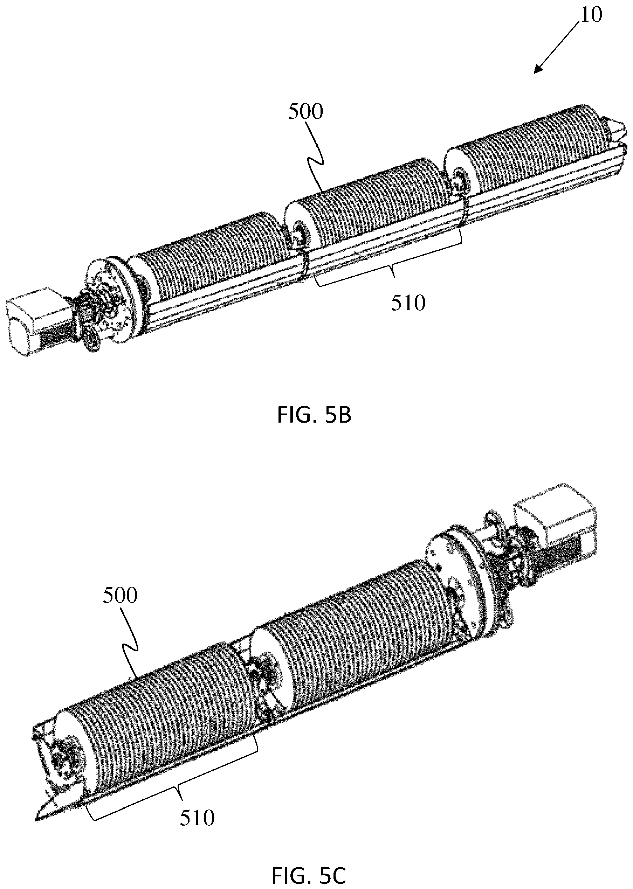

With reference to FIG. 5A to FIG. 5C, there may be provided a liquid filtration system 10. The liquid filtration system 10 may include a plurality of filtering units 500 as described herein before. The plurality of filtering units 500 may be arranged in a train 510 (e.g., a stack). As shown in FIG. 5A, there may be a plurality of interlocking trains 510 inside a pressure vessel. A shown in FIG. 5B and FIG. 5C, an inlet for sludge may be provided at the trains shown in FIG. 5B, and an outlet for clean water may be provided at the trains shown in FIG. 5C. According to various embodiments, the liquid filtration system 10 may be configured as a membrane bioreactor (MBR) or a wastewater treatment plant. Hence, the liquid filtration system 10 may be placed inside a vessel with wastewater (e.g., contaminated water) to be filtered, such as municipal wastewater or industrial wastewater. The plurality of filtering units 500 may be rotatable about a longitudinal axis of the central shaft of the train 510. This rotation may be effected by, e.g., a motor, e.g., an electric motor. In an embodiment, the filtration occurs in an out-in configuration - the wastewater surrounds the outer surfaces of the filtering units 500, including the outer surfaces of the disk-shaped polymeric filtration member, then permeates through the outer surface of the disk-shaped polymeric filtration member, e.g., the membrane, and clean water exits the membrane. In some embodiments, the clean water may then enter an internal region of the disk-shaped polymeric filtration member, i.e. the spacer. From the spacer, the clean water may then exit the disk-shaped polymeric filtration member through the inner side wall of the disk-shaped polymeric filtration member and may enter a central shaft of the train, which may be hollow, and may be collected. The liquid filtration system 10 may be configured to be suitable for ultrafiltration, microfiltration, or nanofiltration.

Accordingly, there is also provided a method 600 of cleaning wastewater using the liquid filtration system as described herein before. The method 600 may include a step 601 of providing a liquid filtration system as described above and positioning the liquid filtration system in a vessel filled (e.g., configured to be filled) with wastewater. The method may include a further step 602 of effecting rotation (e.g., by a motor, e.g., an electric motor) of a plurality of filtering units. The method may include a further step 603 of allowing filtration (e.g., cleaning) of the wastewater to occur through the disk-shaped polymeric filtration member (e.g., wherein the wastewater may surround the outer surfaces of the filtering units). The method may thus further include directing the clean water towards an internal region of the disk-shaped polymeric filtration member, e.g., the spacer. From the spacer, the clean water may then exit the disk-shaped polymeric filtration member through the inner side wall of the disk-shaped polymeric filtration member and may enter a central shaft of the train, which may be hollow. Advantageously, the method 600 may be operated at a rotational speed of the disk-shaped polymeric filtration member of 360 rpm.

The properties of the filtering unit and the choice of characteristics presented above are intended to be exemplary for the filtering unit. It will be apparent to those ordinary skilled practitioners that the foregoing process operations may be modified without departing from the spirit of the present disclosure.

The term "comprising" shall be understood to have a broad meaning similar to the term "including" and will be understood to imply the inclusion of a stated integer or operation or group of integers or operations but not the exclusion of any other integer or operation or group of integers or operations. This definition also applies to variations on the term "comprising" such as "comprise" and "comprises".

By "about" in relation to a given numerical value, such as for thickness and height, it is meant to include numerical values within 10 % of the specified value.

While the present disclosure has been particularly shown and described with reference to specific aspects, it should be understood by those skilled in the art that various changes in form and detail may be made therein without departing from the spirit and scope of the present disclosure as defined by the appended claims. The scope of the present disclosure is thus indicated by the appended claims and all changes which come within the meaning and range of equivalency of the claims are therefore intended to be embraced.

## Claims

1. A filtration unit for a liquid filtration system, comprising:
a disk-shaped polymeric filtration member comprising a first surface and a second surface, wherein the first surface is connected to the second surface with an inner side wall and an outer side wall; and
a stabilizing structure comprising an inner stabilizing ring and an outer stabilizing ring, wherein the inner stabilizing ring reinforces an edge of the inner side wall of the disk-shaped polymeric filtration member and the outer stabilizing ring encircles the outer side wall of the disk-shaped polymeric filtration member,
wherein the inner stabilizing ring is connected to the outer stabilizing ring with a plurality of ribs extending along at least one of the first surface and the second surface of the disk-shaped polymeric filtration member.

2. The filtration unit of claim 1, wherein the disk-shaped polymeric filtration member comprises a membrane.

3. The filtration unit of claim 2, wherein the disk-shaped polymeric filtration member comprises at least two membranes and a spacer, wherein the spacer is sandwiched by the at least two membranes.

4. The filtration unit of any one of the preceding claims, wherein the stabilizing structure is adhesively affixed to the disk-shaped polymeric filtration member.

5. The filtration unit of any one of the preceding claims, wherein the stabilizing structure comprises a polymer.

6. The filtration unit of any one of the preceding claims, wherein the inner stabilizing ring at its smallest expansion has a diameter of less than 14 cm.

7. The filtration unit of any one of the preceding claims, wherein the outer stabilizing ring at its largest expansion has a diameter of at least 30 cm, optionally at least 35 cm.

8. The filtration unit of any one of the preceding claims, wherein at least two ribs of the plurality of ribs are spaced from each other in an angle of more than 90.

9. The filtration unit of any one of the preceding claims, wherein each rib of the plurality of ribs has a first width measured at the inner stabilizing ring and a second width measured at the outer stabilizing ring, and wherein the second width is larger than the first width.

10. The filtration unit of any one of the preceding claims, wherein the outer stabilizing ring encircles the outer side wall of the disk-shaped polymeric filtration member with a thickness of about 1 to about 5 mm.

11. The filtration unit of any one of the preceding claims, wherein the stabilizing structure comprises a first stabilizing part and a second stabilizing part, wherein the first stabilizing part is connected to the second stabilizing part at the outer stabilizing ring.

12. The filtration unit of claim 11, wherein the first stabilizing part comprises a protrusion at the outer stabilizing ring and the second stabilizing part comprises a receptacle at the outer stabilizing ring, wherein the protrusion of the first stabilizing part is interlocked with the receptacle of the second stabilizing part.

13. A method of assembling a filtration unit of any one of claims 1 to 12, the method comprising:
providing a disk-shaped polymeric filtration member comprising a first surface and a second surface, wherein the first surface is connected to the second surface with an inner side wall and an outer side wall; and
adhering a stabilizing structure to the disk-shaped polymeric filtration member, wherein the stabilizing structure comprises an inner stabilizing ring and an outer stabilizing ring, wherein the inner stabilizing ring is connected to the outer stabilizing ring with a plurality of ribs,
wherein the stabilizing structure is adhered to the disk-shaped polymeric filtration member in such a manner that the inner stabilizing ring of the stabilizing structure reinforces an edge of the inner side wall of the disk-shaped polymeric filtration member and the outer stabilizing ring of the stabilizing structure encircles the outer side wall of the disk-shaped polymeric filtration member, and the plurality of ribs extend along at least one of the first surface and the second surface of the disk-shaped polymeric filtration member.

14. The method of claim 13, wherein adhering the stabilizing structure to the disk-shaped polymeric filtration member comprises adhesively affixing the stabilizing structure to the disk-shaped polymeric filtration member.

15. The method of claim 13, wherein adhering the stabilizing structure to the disk-shaped polymeric filtration member comprises welding the stabilizing structure to the disk-shaped polymeric filtration member.
